# EUROPEAN PATENT SPECIFICATION

(11) **EP 4 161 012 B1**
(45) Date of publication and mention of the grant of the patent: **27.05.2026**
(21) Application number: 21811788.5
(22) Date of filing: 26.05.2021
(51) Int. Cl.: H04L 9/40, H04L 9/08, H04L 9/32

(54) **AUTHENTICATION METHOD AND APPARATUS, ELECTRONIC DEVICE, SERVER, PROGRAM, AND STORAGE MEDIUM**
AUTHENTIFIZIERUNGSVERFAHREN UND -VORRICHTUNG, ELEKTRONISCHE VORRICHTUNG, SERVER, PROGRAMM UND SPEICHERMEDIUM
PROCÉDÉ ET APPAREIL D'AUTHENTIFICATION, DISPOSITIF ÉLECTRONIQUE, SERVEUR, PROGRAMME ET SUPPORT DE STOCKAGE

(30) Priority: 27.05.2020 CN 202010464223
(43) Date of publication of application: 05.04.2023
(73) Proprietor: Hangzhou Hikvision Digital Technology Co., Ltd., Hangzhou, Zhejiang 310051 (CN)
(72) Inventor: SHI, Jianfeng, Hangzhou, Zhejiang 310051 (CN)
(74) Representative: Goddar, Heinz J.
(86) International application number: PCT/CN2021/096101
(87) International publication number: WO 2021/238990

(56) References cited:
- WO-A1-2018/121249
- CN-A- 108 769 041
- CN-A- 109 510 802
- CN-A- 109 587 133
- CN-A- 111 447 245
- US-A1- 2015 350 186

## Description

### TECHNICAL FIELD

The present disclosure relates to the field of computer communications, and in particular to an authentication method, an authentication apparatus, an electronic device, a server, a program and a storage medium.

### BACKGROUND

In a network architecture with a client and at least one server, a server management platform for managing all the servers is usually deployed in the network architecture to facilitate the management of the servers.

When a client needs to access network resources on a server, the client needs to log into the server management platform and then log into the server before the client can access the network resources on the server.

Specifically, the client needs to submit user information of the client to the server management platform, such that the user information of the client is authenticated by the server management platform. After the server management platform successfully authenticates the user information of the client, the client also needs to submit the user information of the client to the server for authentication of the user information of the client by the server, and only after the server successfully authenticates the user information of the client, the server returns the network resources accessed by the client to the client.

Since the user needs to submit the user information multiple times during the authentication, it not only greatly reduces the authentication efficiency, but also causes great inconvenience to the user.

WO2018121249A1 discloses an SSL protocol-based access control method and device.

### SUMMARY

The invention is presented in the appended claims and the scope of protection is defined by said appended claims.

In view of this, the disclosure provides an authentication method, an authentication apparatus, an electronic device, a server, a program and a storage medium, to improve the efficiency of authenticating user.

Specifically, the purpose of the present disclosure is realized through the following technical solutions.

According to a first aspect of the present disclosure, an authentication method is provided, and performed by a server management platform included in a group network architecture, where the group network architecture further comprises a client and a server, and the server management platform is coupled between the client and the server, and the method includes: when receiving, by the server management platform, an access request from a client, generating, by the server management platform, identification information corresponding to the access request, and sending, by the server management platform, the access request carrying the identification information to a first designated port in a server; obtaining, by the server management platform, a to-be-authenticated identifier returned through the first designated port, where the to-be-authenticated identifier is returned by the server, based on the identification information carried in the access request, when monitoring that the access request is received through the first designated port, and the to-be-authenticated identifier is identification information or an identifier generated based on the identification information; and authenticating, by the server management platform, the to-be-authenticated identifier, and in response to determining that the to-be-authenticated identifier is successfully authenticated, sending, by the server management platform, to a second designated port in the server a first message indicating that the to-be-authenticated identifier is successfully authenticated, such that the server, when monitoring that the first message is received through the second designated port, responds to the access request, where the first designated port is a first port that is in the server and is coupled with the server management platform, and the second designated port is a second port that is in the server and is coupled with the server management platform.

Optionally, after generating, by the server management platform, the identification information corresponding to the access request, the method further includes: recording the identification information; authenticating, by the server management platform, the to-be-authenticated identifier includes: determining whether there is identification information matching the to-be-authenticated identifier among the recorded identification information; in response to determining that there is the identification information matching the to-be-authenticated identifier among the recorded identification information, determining that the to-be-authenticated identifier is successfully authenticated; and in response to determining that there is no identification information matching the to-be-authenticated identifier among the recorded identification information, determining that the to-be-authenticated identifier fails to be authenticated. Optionally, the method further includes at least one of: deleting by the server management platform, after determining that the to-be-authenticated identifier is successfully authenticated, the identification information matching the to-be-authenticated identifier; or deleting, by the server management platform the identification information when an aging time of the identification information is detected to have arrived.

Optionally, the method further includes: in response to determining that the to-be-authenticated identifier fails to be authenticated, sending, by the server management platform, to the second designated port a second message indicating that the to-be-authenticated identifier fails to be authenticated, such that the server, when monitoring that the second message is received through the second designated port, instructs the client to provide authentication information and authenticates the authentication information, and responds to the access request after the authentication information is successfully authenticated.

According to a second aspect of the present disclosure, an authentication method is provided, and performed by an electronic device included in a group network architecture, where the group network architecture further includes a client, a server and a server management platform coupled between the client and the server, and the electronic device is provided between the server management platform and the server, and the method includes: when receiving, by the electronic device via the server management platform, an access request from a client, generating, by the electronic device, identification information corresponding to the access request, and sending, by the electronic device, the access request carrying the identification information to a first designated port in a server; obtaining, by the electronic device, a to-be-authenticated identifier returned through the first designated port, wherein the to-be-authenticated identifier is returned by the server, based on the identification information carried in the access request, when monitoring that the access request is received through the first designated port, and the to-be-authenticated identifier is identification information or an identifier generated based on the identification information; and authenticating, by the electronic device, the to-be-authenticated identifier, and in response to determining that the to-be-authenticated identifier is successfully authenticated, sending, by the electronic device, to a second designated port in the server a first message indicating that the to-be-authenticated identifier is successfully authenticated, such that the server, when monitoring that the first message is received through the second designated port, responds to the access request, wherein the first designated port is a first port that is in the server and is coupled with the electronic device, and the second designated port is a second port that is in the server and is coupled with the electronic device.

Optionally, the method further includes: in response to determining that the to-be-authenticated identifier fails to be authenticated, sending, by the electronic device, to the second designated port a second message indicating that the to-be-authenticated identifier fails to be authenticated, such that the server, when monitoring that the second message is received through the second designated port, instructs the client to provide authentication information and authenticates the authentication information, and responds to the access request after the authentication information is successfully authenticated.

According to a third aspect of the present disclosure, an authentication method is provided, performed by a server included in a group network architecture, where the group network architecture further comprises a client and a server management platform coupled between the client and the server, and the server comprises a legality authentication module and a business module, and the method includes: when receiving, by the legality authentication module via the server management platform, an access request from a client, generating, by the legality authentication module, identification information corresponding to the access request, and sending, by the legality authentication module, the access request carrying the identification information to a first designated port in a server; when monitoring, the business module, that an access request is received through a first designated port in the server, returning, the business module, a to-be-authenticated identifier to the legality authentication module based on identification information carried in the access request, where the to-be-authenticated identifier is identification information or an identifier generated based on the identification information; authenticating, by the legality authentication module, the to-be-authenticated identifier, and in response to determining that the to-be-authenticated identifier is successfully authenticated, sending, by the legality authentication module, to a second designated port in the server a first message indicating that the to-be-authenticated identifier is successfully authenticated; when monitoring, by the business module, that a first message indicating that the to-be-authenticated identifier is successfully authenticated is received through a second designated port in the server, responding, by the business module, to the access request, where the first designated port is a port that is in the server and corresponds to a first designated protocol, and the second designated port is a port that is in the server and corresponds to a second designated protocol.

Optionally, when monitoring, the business module, that a second message indicating that the to-be-authenticated identifier fails to be authenticated is received through the second designated port, instructing a client to provide authentication information and authenticating, the legality authentication module, the authentication information, and responding, the business module, to the access request after the authentication information is successfully authenticated.

Optionally, the server includes a legality authentication module and a business module; the method is performed by the business module in the server; the legality authentication module is the opposite end, the business module establishes a first communication with the legality authentication module through the first designated port, and the business module establishes a second communication with the legality authentication module through the second designated port. According to a third aspect of the present disclosure, an authentication apparatus is provided, the method includes: a generating unit, configured to, when receiving an access request from a client, generate identification information to be carried in the access request, and send the access request carrying the identification information to a first designated port in a server; an obtaining unit, configured to obtain a to-be-authenticated identifier returned through the first designated port, where the to-be-authenticated identifier is returned by the server, based on the identification information carried in the access request, when monitoring that the access request is received through the first designated port; and an authentication unit, configured to authenticate the to-be-authenticated identifier, and in response to determining that the to-be-authenticated identifier is successfully authenticated, send to a second designated port in the server a first message indicating that the to-be-authenticated identifier is successfully authenticated, such that the server, when monitoring that the first message is received through the second designated port, responds to the access request.

According to a fourth aspect of the present disclosure, an authentication apparatus is provided, the authentication apparatus includes: a sending unit, configured to, when monitoring that an access request is received through a first designated port in the server, return a to-be-authenticated identifier to an opposite end who sent the access request based on identification information carried in the access request; and a responding unit, configured to, when monitoring that a first message indicating that the to-be-authenticated identifier is successfully authenticated is received through a second designated port in the server, respond to the access request. According to a fifth aspect of the present disclosure, an electronic device is provided, the electronic device includes a readable storage medium and a processor, where the readable storage medium is configured to store machine executable instructions; the processor is configured to read the machine executable instructions stored in the readable storage medium, and execute the machine executable instructions to implement the authentication method according to the first aspect.

According to a sixth aspect of the present disclosure, a server is provided, the server includes a readable storage medium and a processor, where the readable storage medium is configured to store machine executable instructions; the processor is configured to read the machine executable instructions stored in the readable storage medium, and execute the machine executable instructions to implement the authentication method according to the second aspect.

According to a sixth aspect of the present disclosure, a computer program is provided, the computer program is stored on a machine-readable storage medium, when a processor executes the computer program, causing the processor to implement the authentication method according to the first aspect.

According to an eighth aspect of the present disclosure, a computer program is provided, the computer program is stored on a machine-readable storage medium, when a processor executes the computer program, causing the processor to implement the authentication method according to the second aspect.

According to a ninth aspect of the present disclosure, a machine-readable storage medium is provided, machine-readable storage medium stores machine executable instructions, when being invoked and executed by a processor, the machine executable instructions cause the processor to implement the authentication method according to the first aspect.

According to a tenth aspect of the present disclosure, a machine-readable storage medium is provided, the machine-readable storage medium stores machine executable instructions, when being invoked and executed by a processor, the machine executable instructions cause the processor to implement the authentication method according to the second aspect.

Since in the mechanism for accessing network resources provided in the present disclosure, the identification information is added to the received access request from the client, and then the access request with the identification information is sent to the server. When receiving the to-be-authenticated identifier returned by the server based on the identification information, the legality authentication of the user is implemented by authenticating the to-be-authenticated identifier instead of authenticating the user information, so that the server does not require the user to enter the user information multiple times when authenticating the user, thereby the efficiency of authenticating users is greatly improved to facilitate the operation of users.

### BRIEF DESCRIPTION OF THE DRAWINGS

FIG. 1 is a schematic diagram illustrating an authentication group network according to an exemplary embodiment of the present disclosure.
FIG. 2 is a flowchart illustrating a conventional method for accessing network resources according to the present disclosure.
FIG. 3 is a flowchart illustrating an authentication method according to an exemplary embodiment of the present disclosure.
FIG. 4 is a flowchart illustrating an authentication method according to another exemplary embodiment of the present disclosure.
FIG. 5 is an interaction diagram illustrating an authentication method according to an exemplary embodiment of the present disclosure.
FIG. 6 is a diagram of a hardware structure illustrating an electronic device according to an exemplary embodiment of the present disclosure.
FIG. 7 is a block diagram illustrating an authentication apparatus according to an exemplary embodiment of the present disclosure.
FIG. 8 is a diagram of the hardware structure illustrating a server according to an exemplary embodiment of the present disclosure.
FIG. 9 is a block diagram illustrating an authentication apparatus according to another exemplary embodiment of the present disclosure.

### DETAILED DESCRIPTION OF THE EMBODIMENTS

Examples will be described in detail herein, with the illustrations thereof represented in the drawings. Where the following description relates to the drawings, unless otherwise indicated, the same numerals in different drawings represent the same or similar elements. The implementations described in the following exemplary embodiments do not represent all implementation consistent with the present disclosure. On the contrary, they are examples of an apparatus and a method consistent with some aspects of the present disclosure described in detail in the appended claims.

The terms used in the present disclosure are for the purpose of describing particular embodiments only and are not intended to limit the present disclosure. Terms determined by "a", "the" and "the" in their singular forms in the present disclosure and the appended claims are also intended to include plurality, unless clearly indicated otherwise in the context. It should also be understood that as used herein, the term "and/or" is and includes any or all combinations of one or more of the associated listed items.

It is to be understood that, although terms "first", "second", "third" and the like may be used in the present disclosure to describe various information, such information should not be limited to these terms. These terms are used only to distinguish the same type of information from each other. For example, without departing from the scope of the present disclosure, first information may be referred as second information; and similarly, second information may also be referred as first information. Depending on the context, as used herein, the wording "if" may be interpreted as "upon ..." or "when ..." or "in response to determining that...".

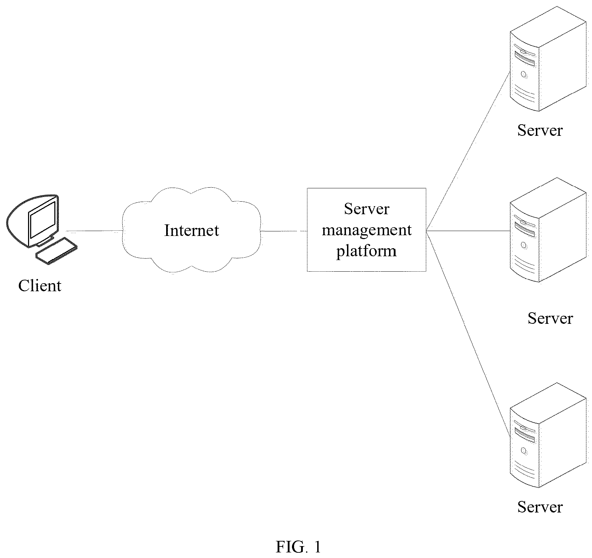

Referring to FIG. 1, FIG. 1 is a schematic diagram illustrating an authentication group network according to an exemplary embodiment of the present disclosure.

The authentication group network includes a client, a server management platform, and at least one server.

The servers have been authenticated in advance by the server management platform, and the server management platform can manage the servers.

Under the group network architecture, the conventional way for a client to access network resources on a server is that the client needs to log into the server management platform and then log into the server to access network resources on the server.

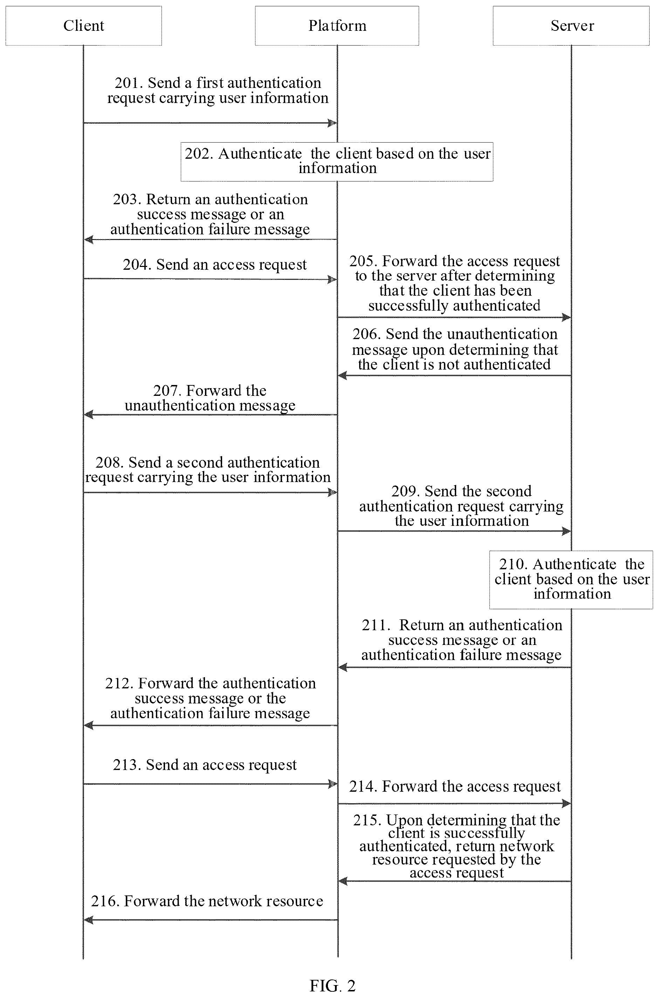

Referring to FIG. 2, FIG. 2 is a flowchart illustrating a conventional method for accessing network resources.

At step 201, the client sends a first authentication request carrying user information to the server management platform.

In implementation, the client presents the login interface of the server management platform to the user, and the user can enter the user information on the login interface of the server management platform. After obtaining the user information entered by the user, the client may send a first authentication request carrying the user information to the server management platform.

At step 202, upon receiving the first authentication request, the server management platform authenticates the user information carried by the first authentication request.

At step 203, the server management platform returns an authentication success message or an authentication failure message to the client.

The server management platform may also return an authentication success message or an authentication failure message to the client.

At step 204, the client sends an access request to the server management platform.

At step 205, the server management platform forwards the access request to the server after determining that the client has been successfully authenticated on the server management platform.

At step 206, the server sends an unauthentication message to the server management platform upon determining that the client is not authenticated on the server.

At step 207, the server management platform forwards the unauthentication message to the client.

At step 208, the client sends a second authentication request carrying the user information to the server management platform.

In implementation, after receiving the unauthenticated message, the client presents the server login interface to the user, and the user can enter the user information on the server login interface. After obtaining the user information entered by the user, the client may send the second authentication request carrying the user information to the server management platform.

At step 209, the server management platform forwards the second authentication request carrying the user information to the server.

At step 210, the server obtains the user information carried in the second authentication request and authenticates the client based on the user information.

At step 211, the server returns an authentication success message or an authentication failure message to the server management platform.

At step 212, the server management platform returns the authentication success message or the authentication failure message to the client.

At step 213, the client sends an access request to the server management platform.

At step 214, the server management platform forwards the access request to the server.

At step 215, the server, after determining that the client is successfully authenticated, returns network resource requested by the access request to the server management platform.

At step 216, the server management platform forwards the network resource to the client.

As can be seen, in the conventional technique of the client accessing network resources on the server, the user needs to submit user information multiple times to complete the login of the server management platform and the login of the server, as a result, while the authentication efficiency is greatly reduced, it causes great inconvenience to users in accessing network resources.

In view of this, the present disclosure provides an authentication method, when an access request from a client is received, identification information to be carried in the access request is generated, and the access request carrying the identification information is sent to a first designated port in a server, so that the server, when monitoring that the access request is received through a designated port, returns a to-be-authenticated identifier based on the identification information carried in the access request. When the to-be-authenticated identifier returned by the server is received, the to-be-authenticated identifier is authenticated, and in response to determining that the to-be-authenticated identifier is successfully authenticated, a first message which indicates that the to-be-authenticated identifier is successfully authenticated is sent to a second designated port in the server, such that the server, when monitoring that the first message is received through the second designated port, responds to the access request.

Since in the mechanism for accessing network resources provided in the present disclosure, the identification information is added to the access request received from the client, and then the access request with the identification information is sent to the server. When receiving the to-be-authenticated identifier returned by the server based on the identification information, the legality authentication of the user is implemented by authenticating the to-be-authenticated identifier instead of authenticating the user information, so that the server does not require the user to enter the user information multiple times when authenticating the user, thereby the efficiency of authenticating users is greatly improved to facilitate the operation of users.

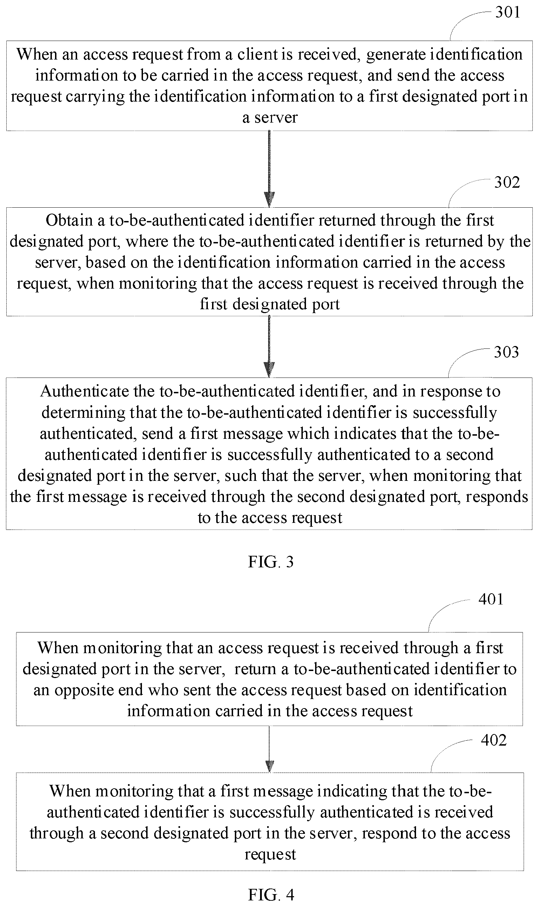

Referring to FIG. 3, FIG. 3 is a flowchart illustrating an authentication method according to an exemplary embodiment of the present disclosure, and the method may include the steps shown below.

At step 301, when an access request from a client is received, identification information to be carried in the access request is generated, and the access request carrying the identification information is sent to a first designated port in a server.

At step 302, a to-be-authenticated identifier returned through the first designated port is obtained, where the to-be-authenticated identifier is returned by the server, based on the identification information carried in the access request, when monitoring that the access request is received through the first designated port.

At step 303, the to-be-authenticated identifier is authenticated, and in response to determining that the to-be-authenticated identifier is successfully authenticated, a first message which indicates that the to-be-authenticated identifier is successfully authenticated is sent to a second designated port in the server, such that the server, when monitoring that the first message is received through the second designated port, responds to the access request.

The identification information may correspond to the access request, and the identification information may be generated randomly, or the identification information may be generated based on the feature information of the access request, and the manner of generating the identification information is not specifically limited herein.

The identification information may be a token, or may be other information, and the identification information is not limited herein.

In embodiments of the present disclosure, the method shown in FIG. 3 may be performed by an electronic device, the electronic device is on an access path for the client to access the server and coupled with the server, the first designated port is a first port coupled with the electronic device in the server, and the second designated port is a second port coupled with the electronic device in the server. The first designated port and the second designated port may be the same port in the server or different ports in the server, and the first designated port and the second designated port are only exemplarily described herein and not specifically limited.

For example, the electronic device may be the server management platform shown in FIG. 1. The electronic device may also be an additional device (not shown in FIG. 1) between the server management platform shown in FIG. 1 and the server, and the electronic device is only exemplarily described herein and not specifically limited.

Optionally, in embodiments of the present disclosure, the method shown in FIG. 3 may be performed by the server, the first designated port is a first port that is in the server and corresponds to a first designated protocol, and the second designated port is a second port that is in the server and corresponds to a second designated protocol. The first designated protocol and the second designated protocol may be the same protocol or different protocols, so that the first designated port and the second designated port may be the same port or different ports, and the first designated port and the second designated port are only exemplarily described herein and not specifically limited.

In implementation, for example, a first module and a second module which may be included in the server may be called a legality authentication module and a business module, respectively. In actual applications, the server may also include modules related to the actual applications, and the modules included in the server are not specifically limited herein.

The method shown in FIG. 3 may be performed by the legality authentication module of the server. The first designated port may be the first port in the server corresponding to the designated protocol. The business module is coupled to the legality authentication module through the first port.

The second designated port may be a second port that is in the server and corresponds to the specified protocol. The business module is coupled to the legality authentication module through the second port. The first designated port and the second designated port may be the same port or different ports, and the first designated port and the second designated port are only exemplarily described herein and not specifically limited.

Several methods of implementing steps 301 to 303 are described below.

A method I of implementing step 301 and step 303 is described below.

The method is performed by the server management platform, the first designated port is a first port coupled with the server management platform in the server. The second designated port is a second port coupled with the electronic device in the server.

In implementing step 301 and step 303, the client may send the access request to the server management platform. When receiving the access request from the client, the server management platform may generate identification information for the access request and add the identification information to the access request. The server management platform may then send the access request to a first designated port in the server.

After monitoring that the access request is received by the first designated port, the server may obtain the identification information carried by the access request and return the to-be-authenticated identifier to the server management platform based on the identification information.

The to-be-authenticated identifier may be identification information or an identifier generated based on the identification information, and the to-be-authenticated identifier is only exemplarily described herein and not specifically limited.

The server management platform, when receiving to-be-authenticated identifier returned by the server, authenticates the to-be-authenticated identifier.

When the to-be-authenticated identifier is successfully authenticated, the server management platform sends to the second designated port of the server a first message indicating that the to-be-authenticated identifier is successfully authenticated, such that the server responds to the access request (e.g., returns the network resources accessed by the access request, etc.) when monitoring that the first message is received through the second designated port.

In an embodiment, when the to-be-authenticated identifier fails to be authenticated, the server management platform sends to the second designated port of the server a second message indicating that the to-be-authenticated identifier fails to be authenticated, such that the server when monitoring that the second message is received through the second designated port, instructs the client to provide authentication information and authenticates the authentication information provided by the client, and responds to the access request after the authentication information is successfully authenticated. The authentication information may include user information (e.g., a user name, a password, etc.), and the authentication information may also include other information, which is only exemplarily described herein and not specifically limited.

A method of "authenticating the to-be-authenticated identifier" is described below.

In embodiments of the present disclosure, after the identification information to be carried in the access request is generated, the identification information may also be recorded.

When authenticating the to-be-authenticated identifier, it can be determined whether there is identification information matching the to-be-authenticated identifier among the recorded identification information, for example, among all the recorded identification information.

If there is identification information matching the to-be-authenticated identifier, it is determined that the to-be-authenticated identifier is successfully authenticated.

If there is no identification information matching the to-be-authenticated identifier, it is determined that the to-be-authenticated identifier fails to be authenticated.

It is noted that when the to-be-authenticated identifier is identification information, the identification information matching the to-be-authenticated identifier is the to-be-authenticated identifier.

When the to-be-authenticated identifier is an identifier generated by the identification information based on a first rule, the identification information matching the to-be-authenticated identifier is a designated identification information, the identifier generated by the designated identification information based on the first rule is the same as the to-be-authenticated identifier.

The "identification information", the "to-be-authenticated identifier", and "authenticating the to-be-authenticated identifier" are only exemplarily described herein and not specifically limited.

Furthermore, in embodiments of the present disclosure, in order to ensure the validity of authenticating the to-be-authenticated identifier, the identification information matching the to-be-authenticated identifier can be deleted after determining that the to-be-authenticated identifier is successfully authenticated.

Furthermore, in embodiments of the present disclosure, in order to ensure the validity of authenticating the to-be-authenticated identifier, the identification information is deleted when a predetermined time period (called aging time) of the identification information is detected to have arrived.

In an optional embodiment, after recording the identification information, an aging time is added to the identification information. Then, the aging time of the recorded identification information may be periodically detected whether the aging time has expired, and the expired identification information is deleted.

A method II of implementing step 301 and step 303 is described below.

The method is performed by an additional electronic device between the server management platform and the server. The first designated port is a first port coupled with the electronic device in the server. The second designated port is a second port coupled with the electronic device in the server.

In implementing step 301 and step 303, the client may send the access request to the server management platform. When receiving the access request from the client, the server management platform may send the access request to the additional electronic device (for the convenience of description, herein noted as a target electronic device). The target electronic device may generate identification information for the access request and add the identification information into the access request. The target electronic device may then send the access request to the first port of the server.

After monitoring that the access request is received by the first designated port, the server may obtain the identification information carried by the access request and return the to-be-authenticated identifier to the target electronic device based on the identification information.

The target electronic device, when receiving the to-be-authenticated identifier returned by the server, authenticates the to-be-authenticated identifier.

When the to-be-authenticated identifier is successfully authenticated, the target electronic device sends to the second designated port of the server a first message indicating that the to-be-authenticated identifier is successfully authenticated, such that the server responds to the access request when monitoring that the first message is received through the second designated port.

In an embodiment, when the to-be-authenticated identifier fails to be authenticated, the target electronic device sends to the second designated port of the server a second message indicating that the to-be-authenticated identifier fails to be authenticated, such that when monitoring that the second message is received through the second designated port, the server instructs the client to provide authentication information and authenticates the authentication information provided by the client, and responds to the access request after the authentication information is successfully authenticated.

It will be noted that the method of "authenticating the to-be-authenticated identifier" can be referred to above, and not be repeated here.

A method III of implementing step 301 and step 303 is described below.

The server includes a legality authentication module and a business module. The server management platform establishes a connection with the legality authentication module of the server, and the legality authentication module establishes a connection with the business module (e.g., a socket connection, etc.).

The method shown in FIG. 3 is performed by the legality authentication module of the server. The first designated port is a port that is in the server and corresponds to a first designated protocol. For example, the first designated port is a first port that is in the server and corresponds to the hyper text transfer protocol (HTTP), e.g., the port is a port 80. The second designated port is a port that is in the server and corresponds to a second designated protocol.

The business module establishes a first socket connection between the business module and the legality authentication module through the first designated port. The business module may also establish a second socket connection between the business module and the legality authentication module through the second designated port. In other words, the port in the business module where the first socket connection is located is the first designated port, and the business module can communicate with the legality authentication module through the first designated port; the port in the business module where the second socket connection is located is the second designated port, and the business module can communicate with the legality authentication module through the second designated port.

It will be noted that the second designated port may be the same as or different from the first designated port. Thus, the first socket connection may be the same as or different from the second socket connection.

In implementing step 301 and step 303, the client may send the access request to the server management platform. When receiving the access request from the client, the server management platform may send the access request to the legality authentication module of the server. The legality authentication module generates identification information for the access request and adds the identification information to the access request. The legality authentication module may then send the access request to the first designated port of the server.

The business module may monitor the first designated port, and after monitoring that the access request has been received by the first designated port, the business module may obtain the identification information carried by the access request and return the to-be-authenticated identifier to the legality authentication module based on the identification information.

After receiving the to-be-authenticated identifier returned by the business module, the legality authentication module authenticates the to-be-authenticated identification.

When the to-be-authenticated identifier is successfully authenticated, the legality authentication module sends to the second designated port of the server a first message indicating that the to-be-authenticated identifier is successfully authenticated, such that the business module responds to the access request when monitoring that the first message is received through the second designated port.

In an embodiment, when the to-be-authenticated identifier fails to be authenticated, the legality authentication module sends to the second designated port of the server a second message indicating that the to-be-authenticated identifier fails to be authenticated, such that when monitoring that the second message is received through the second designated port, the business module instructs the client to provide authentication information and authenticates the authentication information provided by the client, and responds to the access request after the authentication information is successfully authenticated.

It will be noted that in this way "in response to receiving the access request from the server management platform, the legality authentication module of the server may send the access request to the first designated port of the server, so that the business module of the server can monitor the first designated port and obtain the access request", the non-direct communication between the client and the server (i.e., the client is coupled with the server management platform, and the server management platform is coupled with the server) is modified to a faux direct communication (i.e., the client is directly coupled with the server), so that the access request received by the business module of the server via the server management platform is the same as the access request sent directly by the client, thereby the business module of the server deems that the access request is sent directly by the client, processing matters related to the protocol of the server management platform can be ignored as much as possible, thus the process of processing the access request on the server is simplified.

It will also be noted that the way of "authenticating the to-be-authenticated identifier" can be referred to above, and not be repeated here.

As can be seen from the above description, on the one hand, the identification information is added to the access request received from the client, and then the access request with the identification information is sent to the server, and when the to-be-authenticated identifier returned by the server based on the identification information is received, the legality of the user is authenticated by authenticating the to-be-authenticated identifier instead of authenticating the user information, so that the server does not require the user to enter the user information multiple times when authenticating the user, thereby the efficiency of authenticating users is greatly improved to facilitate the operation of users.

On the other hand, under the existing architecture of client, server management platform and server, the secondary development of the server management platform is usually carried out, so that the server management platform has the function of authenticating whether the user can access the network resources of the server, as shown in FIG. 2, and the network resources provided by the server can be provided after the client is successfully authenticated. When the client accesses the server, the client can first log into the server management platform. After the client successfully logs into the server management platform, the client can send an access request to the server management platform for accessing the network resources of the server, and the server management platform can respond to the access request and return the network resources accessed by the access request to the client. As can be seen, in this way, secondary development of the server management platform is required, which greatly increases the workload of the developer.

In contrast, in the present disclosure, since the server management platform transparently transmits the access request to the server, and the server responds to the access request of the client, there is no need for the server management platform to provide the function of authenticating whether the user can access the network resources of the server, i.e., there is no need for secondary development of the server management platform, thereby the workload of the developer is greatly reduced.

Referring to FIG. 4, FIG. 4 is a flowchart illustrating an authentication method according to another exemplary embodiment of the present disclosure, the method may include the steps shown below.

At step 401, when monitoring that an access request is received through a first designated port in the server, a to-be-authenticated identifier is returned to an opposite end who sent the access request based on identification information carried in the access request.

At step 402, when monitoring that a first message indicating that the to-be-authenticated identifier is successfully authenticated is received through a second designated port in the server, the server responds to the access request.

In an embodiment of the present disclosure, the method shown in FIG. 4 may be performed by the server or by the legality authentication module of the server, and the device or module for performing the method shown in FIG. 4 is not specifically limited herein.

Several methods of implementing step 401 and step 402 are described below.

A method I of implementing step 401 and step 402 is described below.

The method shown in FIG. 4 is performed by the server, the opposite end is the server management platform. The first designated port is a first port coupled with the electronic device in the server. The second designated port is a second port coupled with the electronic device in the server. The first designated port and the second designated port may be the same port or different ports, and the first designated port and the second designated port are only exemplarily described herein and not specifically limited.

In implementing step 401 and step 402, the client may send the access request to the server management platform. When receiving the access request from the client, the server management platform may generate identification information for the access request and add the identification information to the access request. Then, the server management platform may send the access request to the first designated port of the server.

After monitoring that the access request has been received by the first designated port, the server may obtain the identification information carried by the access request and return the to-be-authenticated identifier to the server management platform based on the identification information.

The server management platform, when receiving the to-be-authenticated identifier returned by the server, authenticates the to-be-authenticated identifier.

When the to-be-authenticated identifier is successfully authenticated, the server management platform sends to the second designated port of the server a first message indicating that the to-be-authenticated identifier is successfully authenticated, such that the server responds to the access request (e.g., returns the network resources accessed by the access request, etc.) when monitoring that the first message is received through the second designated port.

In an embodiment, when the to-be-authenticated identifier fails to be authenticated, the server management platform sends to the second designated port of the server a second message indicating that the to-be-authenticated identifier fails to be authenticated, such that when monitoring that the second message is received through the second designated port, the server instructs the client to provide authentication information and authenticates the authentication information provided by the client, and responds to the access request after the authentication information is successfully authenticated.

A method II of implementing step 401 and step 402 is described below.

The method shown in FIG. 4 is performed by the server. The opposite end is an additional electronic device between the server management platform and the server. The first designated port is a first port coupled with the additional electronic device in the server. The second designated port is a second port coupled with the additional electronic device in the server.

In implementing step 401 and step 402, the client may send the access request to the server management platform. When receiving the access request from the client, the server management platform may send the access request to the additional electronic device (for the convenience of description, herein noted as a target electronic device). The target electronic device may generate identification information for the access request and add the identification information to the access request. The target electronic device may then send the access request to the first port of the server.

After monitoring that the access request is received by the first designated port, the server may obtain the identification information carried by the access request and return the to-be-authenticated identifier to the target electronic device based on the identification information.

The target electronic device, when receiving the to-be-authenticated identifier returned by the server, authenticates the to-be-authenticated identifier.

When the to-be-authenticated identifier is successfully authenticated, the target electronic device sends to the second designated port of the server a first message indicating that the to-be-authenticated identifier is successfully authenticated, such that the server responds to the access request when monitoring that the first message is received through the second designated port.

In an embodiment, when the to-be-authenticated identifier fails to be authenticated, the target electronic device sends to the second designated port of the server a second message indicating that the to-be-authenticated identifier fails to be authenticated, such that when monitoring that the second message is received by the second designated port, the server instructs the client to provide authentication information and authenticates the authentication information provided by the client, and responds to the access request after the authentication information is successfully authenticated.

A method III of implementing step 401 and step 402 is described below.

The server includes a legality authentication module and a business module. The server management platform establishes a connection with the legality authentication module of the server, and the legality authentication module establishes a connection with the business module (e.g., a socket connection, etc.).

The method shown in FIG. 4 is performed by the business module of the server, and the opposite end is the legality authentication module of the server. The first designated port is a port that is in the server and corresponds to a first designated protocol. For example, the first designated port is a first port that is in the server and corresponds to the hyper text transfer protocol (HTTP), e.g., the port is a port 80. The second designated port is a port that is in the server and corresponds to a second designated protocol.

In implementation, the business module establishes a first socket connection between the business module and the legality authentication module through the first designated port. The business module may also establish a second socket connection between the business module and the legality authentication module through the second designated port. In other words, the port in the business module where the first socket connection is located is the first designated port, and the business module can communicate with the legality authentication module through the first designated port; the port in the business module where the second socket connection is located is the second designated port, and the business module can communicate with the legality authentication module through the second designated port.

In implementing step 401 and step 402, the client may send the access request to the server management platform. When receiving the access request from the client, the server management platform may send the access request to the legality authentication module of the server. The legality authentication module generates identification information for the access request and adds the identification information to the access request. The legality authentication module may then send the access request to the first designated port of the server.

The business module may monitor the first designated port, and after monitoring that the access request has been received by the first designated port, the business module may obtain the identification information carried by the access request and return the to-be-authenticated identifier to the legality authentication module based on the identification information.

After receiving the to-be-authenticated identifier returned by the business module, the legality authentication module authenticates the to-be-authenticated identification.

When the to-be-authenticated identifier is successfully authenticated, the legality authentication module sends to the second designated port of the server a first message indicating that the to-be-authenticated identifier is successfully authenticated, such that the business module responds to the access request when monitoring that the first message is received through the second designated port.

In an embodiment, when the to-be-authenticated identifier fails to be authenticated, the legality authentication module sends to the second designated port of the server a second message indicating that the to-be-authenticated identifier fails to be authenticated, such that when monitoring that the second message is received through the second designated port, the business module instructs the client to provide authentication information and authenticates the authentication information provided by the client, and responds to the access request after the authentication information is successfully authenticated.

The above completes the description of FIG. 4.

Hereinafter, a preferred embodiment of the present disclosure is described with the identification information as a token and the to-be-authenticated identifier as the identification information.

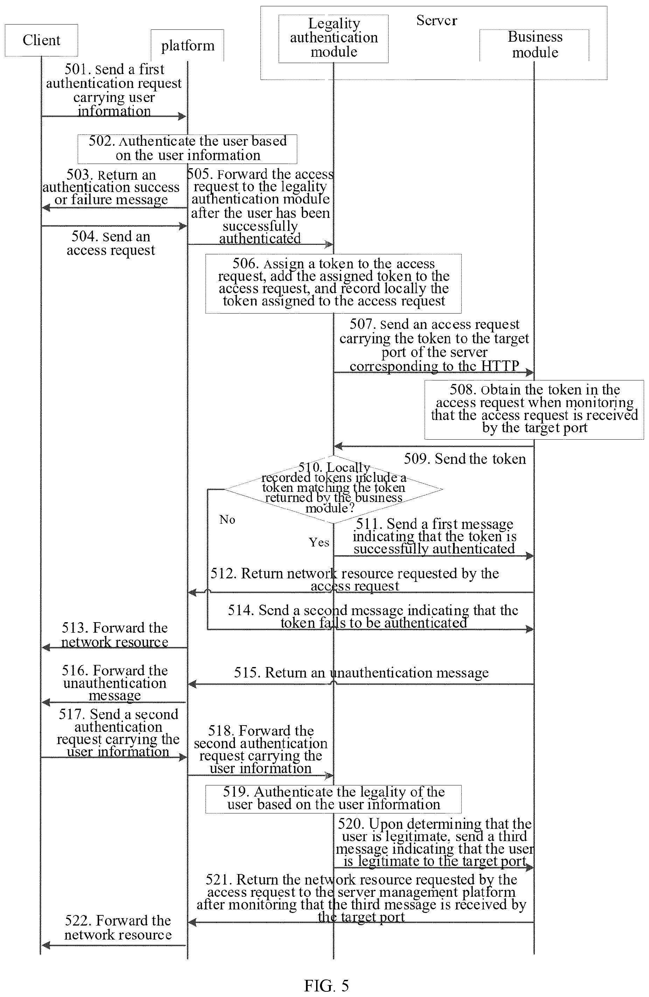

Referring to FIG. 5, FIG. 5 is an interaction diagram illustrating an authentication method according to an exemplary embodiment of the present disclosure.

At step 501, the client sends a first authentication request carrying user information to the server management platform.

In implementation, the client presents the login interface of the server management platform to the user, and the user can enter the user information on the login interface of the server management platform. After obtaining the user information entered by the user, the client may send a first authentication request carrying the user information to the server management platform.

At step 502, after receiving the first authentication request, the server management platform authenticates the user based on the user information.

At step 503, the server management platform returns an authentication success message or an authentication failure message to the client.

At step 504, the client sends an access request to the server management platform.

At step 505, the server management platform forwards the access request to the legality authentication module of the server upon determining that the user has been successfully authenticated by the server management platform.

At step 506, the legality authentication module assigns a token to the access request, adds the assigned token to the access request, and records locally the token assigned to the access request.

At step 507, the legality authentication module sends an access request carrying the token to the target port of the server corresponding to the HTTP.

At step 508, the business module obtains the token in the access request when monitoring that the access request is received by the target port.

At step 509, the business module sends the token to the legality authentication module.

At step 510, the legality authentication module detects whether there is a token matching the token returned by this business module among all the locally recorded tokens.

If there is a token matching the token returned by the business module among all the locally recorded tokens, step 511 to step 513 are performed.

If there is no token matching the token returned by the business module among all the locally recorded tokens, step 514 to step 521 are performed.

At step 511, in response to determining that there is a token matching the token returned by the business module among all the locally recorded tokens, the legality authentication module sends to the target port a first message indicating that the token is successfully authenticated.

At step 512, the business module returns network resource requested by the access request to the server management platform when monitoring that the first message is received through the target port.

At step 513, the server management platform forwards the network resource to the client.

At step 514, if there is no token matching the token returned by the business module among all the locally recorded tokens, the legality authentication module sends to the target port a second message indicating that the token fails to be authenticated.

At step 515, the business module returns an unauthentication message to the server management platform when monitoring that the second message is received through the target port.

At step 516, the server management platform returns the unauthentication message to the client.

At step 517, the client sends a second authentication request carrying the user information to the server management platform.

In implementation, after receiving the unauthenticated message, the client presents the server login interface to the user, and the user can enter the user information on the server login interface. After obtaining the user information entered by the user, the client may send the second authentication request carrying the user information to the server management platform.

At step 518, the server management platform forwards the second authentication request carrying the user information to the legality authentication module.

At step 519, the legality authentication module authenticates the legality of the user based on the user information.

At step 520, upon determining that the user is legitimate, a third message indicating that the user is legitimate is sent to the target port.

At step 521, the business module returns the network resource requested by the access request to the server management platform upon monitoring that the third message is received through the target port.

At step 522, the server management platform forwards the network resource to the client.

As can be seen from the above description, on the one hand, the token is added to the access request received from the client, and then the access request with the token is sent to the server, and when the token returned by the server is received, the legality of the client is authenticated by authenticating the token instead of authenticating the user information, so that the server does not require the client to enter the user information multiple times when authenticating the client, thereby the efficiency of authentication is greatly improved to facilitate the operation of users.

On the other hand, since the server management platform transparently transmits the access request to the server, and the server responds to the access request of the client, instead of the server management platform being responsible for responding to the access request sent by the client, in the present disclosure, there is no need for secondary development of the server management platform, so the workload of the developer is greatly reduced.

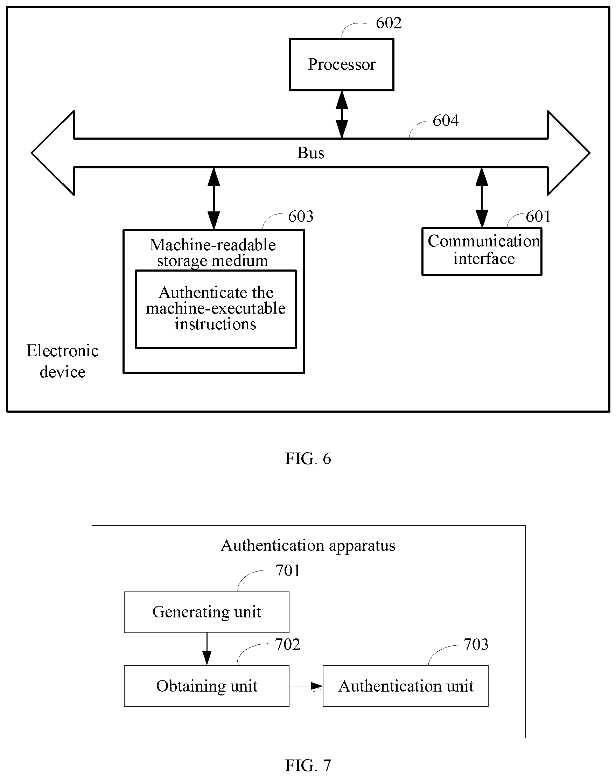

Referring to FIG. 6, FIG. 6 is a diagram of a hardware structure illustrating an electronic device according to an exemplary embodiment of the present disclosure. The electronic device may be a server management platform, or an additional device between the server management platform and the server, or the electronic device may be a server. The electronic device is not specifically limited herein.

The electronic device may include a readable storage medium and a processor; where the readable storage medium is configured to store machine executable instructions; the processor is configured to read the machine executable instructions on the readable storage medium and execute the instructions to perform the authentication method.

Optionally, the electronic device may include a processor 602 and machine-readable storage medium 603, and further include a communication interface 601 and a bus 604. The communication interface 601, the processor 602, and the machine-readable storage medium 603 communicate with each other via the bus 604. The processor 602 may perform the authentication method described above by reading and executing the machine-executable instructions corresponding to the authentication control logic in the machine-readable storage medium 603.

The machine-readable storage medium 603 referred to herein may be any electronic, magnetic, optical, or other physical storage device that may contain or store information, such as executable instructions, data, and the like. For example, the machine-readable storage medium may be: a volatile memory, a non-volatile memory, or similar storage mediums. Specifically, the machine-readable storage medium 603 may be a random access memory (RAM), a flash memory, a storage drive (e.g., a hard disk drive), a solid state disk, any type of storage disks (e.g., CD-ROM, DVD, etc.), or similar storage mediums, or a combination thereof.

Referring to FIG. 7, FIG. 7 is a block diagram illustrating an authentication apparatus according to an exemplary embodiment of the present disclosure. The apparatus may be a part of or installed in the electronic device described in FIG. 6, or the apparatus may be a part of or installed in a legality authentication module of a server, and may include units as shown below.

A generating unit 701 is configured to, when receiving an access request from a client, generate identification information to be carried in the access request, and send the access request carrying the identification information to a first designated port in a server.

An obtaining unit 702 is configured to obtain a to-be-authenticated identifier returned through the first designated port, where the to-be-authenticated identifier is returned by the server, based on the identification information carried in the access request, when monitoring that the access request is received through the first designated port.

An authentication unit 703 is configured to authenticate the to-be-authenticated identifier, and in response to determining that the to-be-authenticated identifier is successfully authenticated, send to a second designated port in the server a first message indicating that the to-be-authenticated identifier is successfully authenticated, such that the server, when monitoring that the first message is received through the second designated port, responds to the access request.

Optionally, the apparatus is a part of or installed in the electronic device, the electronic device is a device in the access path of the client to the server and coupled to the server; the first designated port is a first port coupled with the electronic device in the server; the second designated port is a second port coupled with the electronic device in the server; or, the device is a part of or installed in the server; the first designated port is a port that is in the server and corresponds to a first designated protocol; the second designated port is a port that is in the server and corresponds to a second designated protocol.

Optionally, the electronic device is a server management platform for managing the servers; or, the electronic device is an additional device between the server management platform and the server.

Optionally, the generating unit 701 is further configured to, after generating the identification information to be carried in the access request, record the identification information. the obtaining unit 702 is configured to, when authenticating the to-be-authenticated identifier, determine whether there is identification information matching the to-be-authenticated identifier among the recorded identification information, for example among all the recorded identification information; if there is the identification information matching the to-be-authenticated identifier among the recorded identification information, determining that the to-be-authenticated identifier is successfully authenticated; if there is no identification information matching the to-be-authenticated identifier among the recorded identification information, determining that the to-be-authenticated identifier fails to be authenticated.

Optionally, the apparatus further includes a deleting unit 704 (not shown in FIG. 7) configured to delete, after determining that the to-be-authenticated identifier is successfully authenticated, the identification information matching the to-be-authenticated identifier; and/or delete the identification information when an aging time of the identification information is detected to have arrived.

Optionally, the authentication unit 703 is further configured to, in response to determining that the to-be-authenticated identifier fails to be authenticated, send to the second designated port a second message indicating that the to-be-authenticated identifier fails to be authenticated, such that the server, when monitoring that the second message is received through the second designated port, instructs the client to provide authentication information and authenticates the authentication information, and responds to the access request after the authentication information is successfully authenticated.

In addition, an exemplary embodiment of the present disclosure provides a server.

The server may include a readable storage medium and a processor; where the readable storage medium is configured to store machine executable instructions; the processor is configured to read the machine executable instructions on the readable storage medium and execute the instructions to perform the authentication method described above.

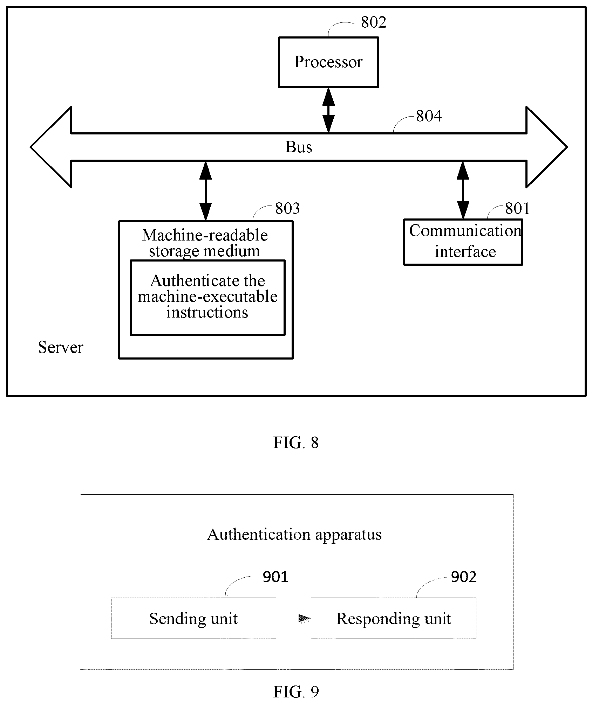

Optionally, as shown in FIG. 8, the server may include may include a processor 802 and machine-readable storage medium 803, and further include a communication interface 801 and a bus 804. The communication interface 801, the processor 802, and the machine-readable storage medium 803 communicate with each other via the bus 804. The processor 802 may perform the authentication method described above by reading and executing the machine-executable instructions corresponding to the authentication control logic in the machine-readable storage medium 803.

The machine-readable storage medium 803 referred to herein may be any electronic, magnetic, optical, or other physical storage device that may contain or store information, such as executable instructions, data, and the like. For example, the machine-readable storage medium may be: a volatile memory, a non-volatile memory, or similar storage mediums. Specifically, the machine-readable storage medium 603 may be a random access memory (RAM), a flash memory, a storage drive (e.g., a hard disk drive), a solid state disk, any type of storage disks (e.g., CD-ROM, DVD, etc.), or similar storage mediums, or a combination thereof.

Referring to FIG. 9, FIG. 9 is a block diagram illustrating an authentication apparatus according to another exemplary embodiment of the present disclosure. The apparatus may be a part of or installed in the server shown in FIG. 8, or may be a part of or installed in a business module of the server, which is not specifically limited here. The apparatus may include units shown below.

A sending unit 901 is configured to, when monitoring that an access request is received through a first designated port in the server, return a to-be-authenticated identifier to an opposite end who sent the access request based on identification information carried in the access request.

A responding unit 902 is configured to, when monitoring that a first message indicating that the to-be-authenticated identifier is successfully authenticated is received through a second designated port in the server, respond to the access request.

Optionally, the first designated port is a first port coupled with the opposite end in the server; and the second designated port is a second port coupled with the opposite end in the server.

The opposite end is an electronic device on an access path for a client to access the server and coupled with the server; or, the first designated port is a port that is in the server and corresponds to a first designated protocol, and the second designated port is a port that is in the server and corresponds to a second designated protocol.

Optionally, the responding unit 902 is further configured to, when monitoring that a second message indicating that the to-be-authenticated identifier fails to be authenticated is received through the second designated port, instruct a client to provide authentication information and authenticate the authentication information, and respond to the access request after the authentication information is successfully authenticated.

Furthermore, the present disclosure provides a computer program stored on a machine-readable storage medium, when a processor executes the computer program, causing the processor to implement the authentication method shown in FIG. 3.

Furthermore, the present disclosure provides a computer program stored on a machine-readable storage medium, when a processor executes the computer program, causing the processor to implement the authentication method shown in FIG. 4. Furthermore, the present disclosure provides a machine-readable storage medium storing machine executable instructions, when being invoked and executed by a processor, the machine executable instructions cause the processor to implement the authentication method shown in FIG. 3.

Furthermore, the present disclosure provides a machine-readable storage medium storing machine executable instructions, when being invoked and executed by a processor, the machine executable instructions cause the processor to implement the authentication method shown in FIG. 4.

For details about the implementation process of the functions and effects of the units in the above apparatus, reference can be made to the implementation process of the corresponding steps in the above method, details of which will not be repeated herein. Since embodiments of the device substantially corresponds to embodiments of the method, relevant parts may be referred to the description of the embodiments of the method. The examples of apparatuses described above are merely illustrative and the units described as separate components may be or not be physically separated, and the components displayed as units may be or not be physical units, i.e., may be located in one place, or may be distributed to a plurality of network units. Some or all of these modules can be selected according to actual needs to achieve the objective of the solution of the present disclosure. It may be understood and implemented by those skilled in the art without creative work.

## Claims

1. An authentication method, performed by a server management platform included in a group network architecture, wherein the group network architecture further comprises a client and a server, and the server management platform is coupled between the client and the server, the method comprising:
when receiving, by the server management platform, an access request from a client, generating (301), by the server management platform, identification information corresponding to the access request, and sending, by the server management platform, the access request carrying the identification information to a first designated port in a server;
obtaining (302), by the server management platform, a to-be-authenticated identifier returned through the first designated port, wherein the to-be-authenticated identifier is returned by the server, based on the identification information carried in the access request, when monitoring that the access request is received through the first designated port, and the to-be-authenticated identifier is identification information or an identifier generated based on the identification information; and
authenticating (303), by the server management platform, the to-be-authenticated identifier, and in response to determining that the to-be-authenticated identifier is successfully authenticated, sending, by the server management platform, to a second designated port in the server a first message indicating that the to-be-authenticated identifier is successfully authenticated, such that the server, when monitoring that the first message is received through the second designated port, responds to the access request,
wherein the first designated port is a first port that is in the server and is coupled with the server management platform, and the second designated port is a second port that is in the server and is coupled with the server management platform.

2. The method of claim 1, wherein after generating, by the server management platform, the identification information corresponding to the access request, the method further comprises:
recording the identification information;
authenticating, by the server management platform, the to-be-authenticated identifier comprises:
determining whether there is identification information matching the to-be-authenticated identifier among the recorded identification information;
in response to determining that there is the identification information matching the to-be-authenticated identifier among the recorded identification information, determining that the to-be-authenticated identifier is successfully authenticated; and
in response to determining that there is no identification information matching the to-be-authenticated identifier among the recorded identification information, determining that the to-be-authenticated identifier fails to be authenticated.

3. The method of claim 2, further comprising at least one of:
deleting, by the server management platform, after determining that the to-be-authenticated identifier is successfully authenticated, the identification information matching the to-be-authenticated identifier; or
deleting, by the server management platform, the identification information when an aging time of the identification information is detected to have arrived.

4. The method of claim 1, further comprising:
in response to determining that the to-be-authenticated identifier fails to be authenticated, sending, by the server management platform, to the second designated port a second message indicating that the to-be-authenticated identifier fails to be authenticated, such that the server, when monitoring that the second message is received through the second designated port, instructs the client to provide authentication information and authenticates the authentication information, and responds to the access request after the authentication information is successfully authenticated.

5. An authentication method, performed by an electronic device included in a group network architecture, wherein the group network architecture further comprises a client, a server and a server management platform coupled between the client and the server, and the electronic device is provided between the server management platform and the server, the method comprising:
when receiving, by the electronic device via the server management platform, an access request from a client, generating, by the electronic device, identification information corresponding to the access request, and sending, by the electronic device, the access request carrying the identification information to a first designated port in a server;
obtaining, by the electronic device, a to-be-authenticated identifier returned through the first designated port, wherein the to-be-authenticated identifier is returned by the server, based on the identification information carried in the access request, when monitoring that the access request is received through the first designated port, and the to-be-authenticated identifier is identification information or an identifier generated based on the identification information; and
authenticating, by the electronic device, the to-be-authenticated identifier, and in response to determining that the to-be-authenticated identifier is successfully authenticated, sending, by the electronic device, to a second designated port in the server a first message indicating that the to-be-authenticated identifier is successfully authenticated, such that the server, when monitoring that the first message is received through the second designated port, responds to the access request,
wherein the first designated port is a first port that is in the server and is coupled with the electronic device, and the second designated port is a second port that is in the server and is coupled with the electronic device.

6. The method of claim 5, further comprising:
in response to determining that the to-be-authenticated identifier fails to be authenticated, sending, by the electronic device, to the second designated port a second message indicating that the to-be-authenticated identifier fails to be authenticated, such that the server, when monitoring that the second message is received through the second designated port, instructs the client to provide authentication information and authenticates the authentication information, and responds to the access request after the authentication information is successfully authenticated.

7. An authentication method, performed by a server included in a group network architecture, wherein the group network architecture further comprises a client and a server management platform coupled between the client and the server, and the server comprises a legality authentication module and a business module, the method comprising:
when receiving, by the legality authentication module via the server management platform, an access request from a client, generating, by the legality authentication module, identification information corresponding to the access request, and sending, by the legality authentication module, the access request carrying the identification information to a first designated port in a server;
when monitoring, by the business module, that an access request is received through a first designated port in the server, returning (401), by the business module, a to-be-authenticated identifier to the legality authentication module based on identification information carried in the access request, wherein the to-be-authenticated identifier is identification information or an identifier generated based on the identification information;
authenticating, by the legality authentication module, the to-be-authenticated identifier, and in response to determining that the to-be-authenticated identifier is successfully authenticated, sending, by the legality authentication module, to a second designated port in the server a first message indicating that the to-be-authenticated identifier is successfully authenticated;
when monitoring (402), by the business module, that a first message indicating that the to-be-authenticated identifier is successfully authenticated is received through a second designated port in the server, responding, by the business module, to the access request,
wherein the first designated port is a port that is in the server and corresponds to a first designated protocol, and the second designated port is a port that is in the server and corresponds to a second designated protocol.

8. The method of claim 7, wherein the business module establishes a first communication with the legality authentication module through the first designated port, and the business module establishes a second communication with the legality authentication module through the second designated port.

9. The method of claim 7, further comprising:
when monitoring, by the business module, that a second message indicating that the to-be-authenticated identifier fails to be authenticated is received through the second designated port, instructing a client to provide authentication information and authenticating, by the legality authentication module, the authentication information, and responding, by the business module, to the access request after the authentication information is successfully authenticated.

10. An electronic device, comprising a readable storage medium and a processor,
wherein the readable storage medium is configured to store machine executable instructions;
the processor is configured to read the machine executable instructions stored in the readable storage medium, and execute the machine executable instructions to implement the method according to any one of claims 1-9.

11. A computer program, stored on a machine-readable storage medium, when a processor executes the computer program, causing the processor to implement the method according to any one of claims 1-9.

12. A machine-readable storage medium, storing machine executable instructions, when being invoked and executed by a processor, the machine executable instructions cause the processor to implement the method according to any one of claims 1-9.

## Patentansprüche

1. Authentifizierungsverfahren, das von einer Serververwaltungsplattform durchgeführt wird, die in einer Gruppennetzwerkarchitektur enthalten ist, wobei die Gruppennetzwerkarchitektur ferner einen Client und einen Server umfasst und die Serververwaltungsplattform zwischen dem Client und dem Server gekoppelt ist, wobei das Verfahren folgende Schritte umfasst:
wenn durch die Serververwaltungsplattform eine Zugriffsanforderung von einem Client empfangen wird, Erzeugen (301), durch die Serververwaltungsplattform, von Identifikationsinformationen, die der Zugriffsanforderung entsprechen, und Senden, durch die Serververwaltungsplattform, der Zugriffsanforderung, die die Identifikationsinformationen trägt, an einen ersten designierten Port eines Servers;
Erhalten (302), durch die Serververwaltungsplattform, einer zu authentifizierenden Kennung, die durch den ersten designierten Port zurückgegeben wird, wobei die zu authentifizierende Kennung durch den Server zurückgegeben wird, basierend auf den Identifikationsinformationen, die in der Zugriffsanforderung getragen werden, wenn überwacht wird, dass die Zugriffsanforderung durch den ersten designierten Port empfangen wird, und die zu authentifizierende Kennung Identifikationsinformationen oder eine Kennung ist, die basierend auf den Identifikationsinformationen erzeugt wird; und
Authentifizieren (303), durch die Serververwaltungsplattform, der zu authentifizierenden Kennung, und als Reaktion auf ein Bestimmen, dass die zu authentifizierende Kennung erfolgreich authentifiziert ist, Senden, durch die Serververwaltungsplattform, an einen zweiten designierten Port des Servers, einer ersten Nachricht, die angibt, dass die zu authentifizierende Kennung erfolgreich authentifiziert ist, sodass der Server, wenn überwacht wird, dass die erste Nachricht durch den zweiten designierten Port empfangen wird, auf die Zugriffsanforderung antwortet,
wobei der erste designierte Port ein erster Port ist, der sich in dem Server befindet und mit der Serververwaltungsplattform gekoppelt ist, und der zweite designierte Port ein zweiter Port ist, der sich in dem Server befindet und mit der Serververwaltungsplattform gekoppelt ist.

2. Verfahren nach Anspruch 1, wobei nach dem Erzeugen, durch die Serververwaltungsplattform, der Identifikationsinformationen, die der Zugriffsanforderung entsprechen, das Verfahren ferner folgende Schritte umfasst:
Aufzeichnen der Identifikationsinformationen;
wobei das Authentifizieren, durch die Serververwaltungsplattform, der zu authentifizierenden Kennung folgende Schritte umfasst:
Bestimmen, ob Identifikationsinformationen, die mit der zu authentifizierenden Kennung übereinstimmen, unter den aufgezeichneten Identifikationsinformationen vorhanden sind;
als Reaktion auf das Bestimmen, dass die Identifikationsinformationen, die mit der zu authentifizierenden Kennung übereinstimmen, unter den aufgezeichneten Identifikationsinformationen vorhanden sind, Bestimmen, dass die zu authentifizierende Kennung erfolgreich authentifiziert ist; und
als Reaktion auf das Bestimmen, dass keine Identifikationsinformationen, die mit der zu authentifizierenden Kennung übereinstimmen, unter den aufgezeichneten Identifikationsinformationen vorhanden sind, Bestimmen, dass die zu authentifizierende Kennung nicht authentifiziert werden kann.

3. Verfahren nach Anspruch 2, das ferner mindestens einen der folgenden Schritte umfasst:
Löschen, durch die Serververwaltungsplattform, nach dem Bestimmen, dass die zu authentifizierende Kennung erfolgreich authentifiziert ist, der Identifikationsinformationen, die mit der zu authentifizierenden Kennung übereinstimmen; oder
Löschen, durch die Serververwaltungsplattform, der Identifikationsinformationen, wenn detektiert wird, dass eine Alterungszeit der Identifikationsinformationen erreicht ist.

4. Verfahren nach Anspruch 1, das ferner folgende Schritte umfasst:
als Reaktion auf das Bestimmen, dass die zu authentifizierende Kennung nicht authentifiziert werden kann, Senden, durch die Serververwaltungsplattform, an den zweiten designierten Port, einer zweiten Nachricht, die angibt, dass die zu authentifizierende Kennung nicht authentifiziert werden kann, sodass der Server, wenn überwacht wird, dass die zweite Nachricht durch den zweiten designierten Port empfangen wird, den Client anweist, Authentifizierungsinformationen bereitzustellen, und die Authentifizierungsinformationen authentifiziert, und auf die Zugriffsanforderung antwortet, nachdem die Authentifizierungsinformationen erfolgreich authentifiziert sind.

5. Authentifizierungsverfahren, das von einer elektronischen Vorrichtung durchgeführt wird, die in einer Gruppennetzwerkarchitektur enthalten ist, wobei die Gruppennetzwerkarchitektur ferner einen Client, einen Server und eine Serververwaltungsplattform umfasst, die zwischen dem Client und dem Server gekoppelt ist, und die elektronische Vorrichtung zwischen der Serververwaltungsplattform und dem Server bereitgestellt ist, wobei das Verfahren folgende Schritte umfasst:
wenn durch die elektronische Vorrichtung über die Serververwaltungsplattform eine Zugriffsanforderung von einem Client empfangen wird, Erzeugen, durch die elektronische Vorrichtung, von Identifikationsinformationen, die der Zugriffsanforderung entsprechen, und Senden, durch die elektronische Vorrichtung, der Zugriffsanforderung, die die Identifikationsinformationen trägt, an einen ersten designierten Port eines Servers;
Erhalten, durch die elektronische Vorrichtung, einer zu authentifizierenden Kennung, die durch den ersten designierten Port zurückgegeben wird, wobei die zu authentifizierende Kennung durch den Server zurückgegeben wird, basierend auf den Identifikationsinformationen, die in der Zugriffsanforderung getragen werden, wenn überwacht wird, dass die Zugriffsanforderung durch den ersten designierten Port empfangen wird, und die zu authentifizierende Kennung Identifikationsinformationen oder eine Kennung ist, die basierend auf den Identifikationsinformationen erzeugt wird; und
Authentifizieren, durch die elektronische Vorrichtung, der zu authentifizierenden Kennung, und als Reaktion auf ein Bestimmen, dass die zu authentifizierende Kennung erfolgreich authentifiziert ist, Senden, durch die elektronische Vorrichtung, an einen zweiten designierten Port des Servers, einer ersten Nachricht, die angibt, dass die zu authentifizierende Kennung erfolgreich authentifiziert ist, sodass der Server, wenn überwacht wird, dass die erste Nachricht durch den zweiten designierten Port empfangen wird, auf die Zugriffsanforderung antwortet,
wobei der erste designierte Port ein erster Port ist, der sich in dem Server befindet und mit der elektronischen Vorrichtung gekoppelt ist, und der zweite designierte Port ein zweiter Port ist, der sich in dem Server befindet und mit der elektronischen Vorrichtung gekoppelt ist.

6. Verfahren nach Anspruch 5, das ferner folgende Schritte umfasst:
als Reaktion auf das Bestimmen, dass die zu authentifizierende Kennung nicht authentifiziert werden kann, Senden, durch die elektronische Vorrichtung, an den zweiten designierten Port, einer zweiten Nachricht, die angibt, dass die zu authentifizierende Kennung nicht authentifiziert werden kann, sodass der Server, wenn überwacht wird, dass die zweite Nachricht durch den zweiten designierten Port empfangen wird, den Client anweist, Authentifizierungsinformationen bereitzustellen, und die Authentifizierungsinformationen authentifiziert, und auf die Zugriffsanforderung antwortet, nachdem die Authentifizierungsinformationen erfolgreich authentifiziert sind.

7. Authentifizierungsverfahren, das von einem Server durchgeführt wird, der in einer Gruppennetzwerkarchitektur enthalten ist, wobei die Gruppennetzwerkarchitektur ferner einen Client und eine Serververwaltungsplattform umfasst, die zwischen dem Client und dem Server gekoppelt ist, und der Server ein Rechtmäßigkeitsauthentifizierungsmodul und ein Geschäftsmodul umfasst, wobei das Verfahren folgende Schritte umfasst:
wenn durch das Rechtmäßigkeitsauthentifizierungsmodul über die Serververwaltungsplattform eine Zugriffsanforderung von einem Client empfangen wird, Erzeugen, durch das Rechtmäßigkeitsauthentifizierungsmodul, von Identifikationsinformationen, die der Zugriffsanforderung entsprechen, und Senden, durch das Rechtmäßigkeitsauthentifizierungsmodul, der Zugriffsanforderung, die die Identifikationsinformationen trägt, an einen ersten designierten Port eines Servers;
wenn durch das Geschäftsmodul überwacht wird, dass eine Zugriffsanforderung durch einen ersten designierten Port in dem Server empfangen wird, Zurückgeben (401), durch das Geschäftsmodul, einer zu authentifizierenden Kennung an das Rechtmäßigkeitsauthentifizierungsmodul basierend auf Identifikationsinformationen, die in der Zugriffsanforderung getragen werden, wobei die zu authentifizierende Kennung Identifikationsinformationen oder eine Kennung ist, die basierend auf den Identifikationsinformationen erzeugt wird;
Authentifizieren, durch das Rechtmäßigkeitsauthentifizierungsmodul, der zu authentifizierenden Kennung, und als Reaktion auf ein Bestimmen, dass die zu authentifizierende Kennung erfolgreich authentifiziert ist, Senden, durch das Rechtmäßigkeitsauthentifizierungsmodul, an einen zweiten designierten Port des Servers, einer ersten Nachricht, die angibt, dass die zu authentifizierende Kennung erfolgreich authentifiziert ist;
wenn durch das Geschäftsmodul überwacht wird (402), dass eine erste Nachricht, die angibt, dass die zu authentifizierende Kennung erfolgreich authentifiziert ist, durch einen zweiten designierten Port des Servers empfangen wird, Antworten, durch das Geschäftsmodul, auf die Zugriffsanforderung,
wobei der erste designierte Port ein Port ist, der sich in dem Server befindet und einem ersten designierten Protokoll entspricht, und der zweite designierte Port ein Port ist, der sich in dem Server befindet und einem zweiten designierten Protokoll entspricht.

8. Verfahren nach Anspruch 7, wobei das Geschäftsmodul eine erste Kommunikation mit dem Rechtmäßigkeitsauthentifizierungsmodul durch den ersten designierten Port herstellt und das Geschäftsmodul eine zweite Kommunikation mit dem Rechtmäßigkeitsauthentifizierungsmodul durch den zweiten designierten Port herstellt.

9. Verfahren nach Anspruch 7, das ferner folgende Schritte umfasst:
wenn durch das Geschäftsmodul überwacht wird, dass eine zweite Nachricht, die angibt, dass die zu authentifizierende Kennung nicht authentifiziert werden kann, durch den zweiten designierten Port empfangen wird, Anweisen eines Clients, Authentifizierungsinformationen bereitzustellen, und Authentifizieren, durch das Rechtmäßigkeitsauthentifizierungsmodul, der Authentifizierungsinformationen, und Antworten, durch das Geschäftsmodul, auf die Zugriffsanforderung, nachdem die Authentifizierungsinformationen erfolgreich authentifiziert sind.

10. Elektronische Vorrichtung, die ein lesbares Speichermedium und einen Prozessor umfasst,
wobei das lesbare Speichermedium eingerichtet ist, maschinenausführbare Befehle zu speichern;
der Prozessor eingerichtet ist, die maschinenausführbaren Befehle, die in dem lesbaren Speichermedium gespeichert sind, zu lesen und die maschinenausführbaren Befehle auszuführen, um das Verfahren nach einem der Ansprüche 1-9 zu implementieren.

11. Computerprogramm, das auf einem maschinenlesbaren Speichermedium gespeichert ist, das, wenn ein Prozessor das Computerprogramm ausführt, den Prozessor veranlasst, das Verfahren nach einem der Ansprüche 1-9 zu implementieren.

12. Maschinenlesbares Speichermedium, das maschinenausführbare Befehle speichert, wobei, wenn sie durch einen Prozessor aufgerufen und ausgeführt werden, die maschinenausführbaren Befehle den Prozessor veranlassen, das Verfahren nach einem der Ansprüche 1-9 zu implementieren.

## Revendications

1. Procédé d'authentification, réalisé par une plate-forme de gestion de serveur incluse dans une architecture de réseau de groupe, dans lequel l'architecture de réseau de groupe comprend en outre un client et un serveur, et la plate-forme de gestion de serveur est couplée entre le client et le serveur, le procédé comprenant :
lors de la réception, par la plate-forme de gestion de serveur, d'une demande d'accès provenant d'un client, la génération (301), par la plate-forme de gestion de serveur, d'informations d'identification correspondant à la demande d'accès, et l'envoi, par la plate-forme de gestion de serveur, de la demande d'accès transportant les informations d'identification à un premier port désigné dans un serveur ;
l'obtention (302), par la plate-forme de gestion de serveur, d'un identifiant à authentifier renvoyé par l'intermédiaire du premier port désigné, dans lequel l'identifiant à authentifier est renvoyé par le serveur, sur la base des informations d'identification transportées dans la demande d'accès, lors de la surveillance que la demande d'accès est reçue par l'intermédiaire du premier port désigné, et l'identifiant à authentifier est des informations d'identification ou un identifiant généré sur la base des informations d'identification ; et
l'authentification (303), par la plate-forme de gestion de serveur, de l'identifiant à authentifier, et en réponse à la détermination que l'identifiant à authentifier est authentifié avec succès, l'envoi, par la plate-forme de gestion de serveur, à un second port désigné dans le serveur d'un premier message indiquant que l'identifiant à authentifier est authentifié avec succès, de sorte que le serveur, lors de la surveillance que le premier message est reçu par l'intermédiaire du second port désigné, réponde à la demande d'accès,
dans lequel le premier port désigné est un premier port qui est dans le serveur et est couplé à la plate-forme de gestion de serveur, et le second port désigné est un second port qui est dans le serveur et est couplé à la plate-forme de gestion de serveur.

2. Procédé selon la revendication 1, dans lequel après la génération, par la plate-forme de gestion de serveur, des informations d'identification correspondant à la demande d'accès, le procédé comprend en outre :
l'enregistrement des informations d'identification ;
l'authentification, par la plate-forme de gestion de serveur, de l'identifiant à authentifier, comprenant :
la détermination s'il y a des informations d'identification correspondant à l'identifiant à authentifier parmi les informations d'identification enregistrées ;
en réponse à la détermination qu'il y a les informations d'identification correspondant à l'identifiant à authentifier parmi les informations d'identification enregistrées, la détermination que l'identifiant à authentifier est authentifié avec succès ; et
en réponse à la détermination qu'il n'y a pas d'informations d'identification correspondant à l'identifiant à authentifier parmi les informations d'identification enregistrées, la détermination que l'identifiant à authentifier n'est pas authentifié.

3. Procédé selon la revendication 2, comprenant en outre au moins l'une parmi :
la suppression, par la plate-forme de gestion de serveur, après la détermination que l'identifiant à authentifier est authentifié avec succès, des informations d'identification correspondant à l'identifiant à authentifier ; ou
la suppression, par la plate-forme de gestion de serveur, des informations d'identification lorsqu'un délai d'expiration des informations d'identification est détecté comme étant arrivé.

4. Procédé selon la revendication 1, comprenant en outre :
en réponse à la détermination que l'identifiant à authentifier n'est pas authentifié, l'envoi, par la plate-forme de gestion de serveur, au second port désigné d'un second message indiquant que l'identifiant à authentifier n'est pas authentifié, de sorte que le serveur, lors de la surveillance que le second message est reçu par l'intermédiaire du second port désigné, ordonne au client de fournir des informations d'authentification et authentifie les informations d'authentification, et réponde à la demande d'accès après que les informations d'authentification sont authentifiées avec succès.

5. Procédé d'authentification, réalisé par un dispositif électronique inclus dans une architecture de réseau de groupe, dans lequel l'architecture de réseau de groupe comprend en outre un client, un serveur et une plate-forme de gestion de serveur couplée entre le client et le serveur, et le dispositif électronique est fourni entre la plate-forme de gestion de serveur et le serveur, le procédé comprenant :
lors de la réception, par le dispositif électronique par l'intermédiaire de la plate-forme de gestion de serveur, d'une demande d'accès provenant d'un client, la génération, par le dispositif électronique, d'informations d'identification correspondant à la demande d'accès, et l'envoi, par le dispositif électronique, de la demande d'accès transportant les informations d'identification à un premier port désigné dans un serveur ;
l'obtention, par le dispositif électronique, d'un identifiant à authentifier renvoyé par l'intermédiaire du premier port désigné, dans lequel l'identifiant à authentifier est renvoyé par le serveur, sur la base des informations d'identification transportées dans la demande d'accès, lors de la surveillance que la demande d'accès est reçue par l'intermédiaire du premier port désigné, et l'identifiant à authentifier est des informations d'identification ou un identifiant généré sur la base des informations d'identification ; et
l'authentification, par le dispositif électronique, de l'identifiant à authentifier, et en réponse à la détermination que l'identifiant à authentifier est authentifié avec succès, l'envoi, par le dispositif électronique, à un second port désigné dans le serveur d'un premier message indiquant que l'identifiant à authentifier est authentifié avec succès, de sorte que le serveur, lors de la surveillance que le premier message est reçu par l'intermédiaire du second port désigné, réponde à la demande d'accès,
dans lequel le premier port désigné est un premier port qui est dans le serveur et est couplé au dispositif électronique, et le second port désigné est un second port qui est dans le serveur et est couplé au dispositif électronique.

6. Procédé selon la revendication 5, comprenant en outre :
en réponse à la détermination que l'identifiant à authentifier n'est pas authentifié, l'envoi, par le dispositif électronique, au second port désigné d'un second message indiquant que l'identifiant à authentifier n'est pas authentifié, de sorte que le serveur, lors de la surveillance que le second message est reçu par l'intermédiaire du second port désigné, ordonne au client de fournir des informations d'authentification et authentifie les informations d'authentification, et réponde à la demande d'accès après que les informations d'authentification sont authentifiées avec succès.

7. Procédé d'authentification, réalisé par un serveur inclus dans une architecture de réseau de groupe, dans lequel l'architecture de réseau de groupe comprend en outre un client et une plate-forme de gestion de serveur couplée entre le client et le serveur, et le serveur comprend un module d'authentification de légitimité et un module commercial, le procédé comprenant :
lors de la réception, par le module d'authentification de légitimité par l'intermédiaire de la plate-forme de gestion de serveur, d'une demande d'accès provenant d'un client, la génération, par le module d'authentification de légitimité, d'informations d'identification correspondant à la demande d'accès, et l'envoi, par le module d'authentification de légitimité, de la demande d'accès transportant les informations d'identification à un premier port désigné dans un serveur ;
lors de la surveillance, par le module commercial, qu'une demande d'accès est reçue par l'intermédiaire d'un premier port désigné dans le serveur, le renvoi (401), par le module commercial, d'un identifiant à authentifier au module d'authentification de légitimité sur la base d'informations d'identification transportées dans la demande d'accès, dans lequel l'identifiant à authentifier est des informations d'identification ou un identifiant généré sur la base des informations d'identification ;
l'authentification, par le module d'authentification de légitimité, de l'identifiant à authentifier, et en réponse à la détermination que l'identifiant à authentifier est authentifié avec succès, l'envoi, par le module d'authentification de légitimité, à un second port désigné dans le serveur d'un premier message indiquant que l'identifiant à authentifier est authentifié avec succès ;
lors de la surveillance (402), par le module commercial, qu'un premier message indiquant que l'identifiant à authentifier est authentifié avec succès est reçu par l'intermédiaire d'un second port désigné dans le serveur, la réponse, par le module commercial, à la demande d'accès,
dans lequel le premier port désigné est un port qui est dans le serveur et correspond à un premier protocole désigné, et le second port désigné est un port qui est dans le serveur et correspond à un second protocole désigné.

8. Procédé selon la revendication 7, dans lequel le module commercial établit une première communication avec le module d'authentification de légitimité par l'intermédiaire du premier port désigné, et le module commercial établit une seconde communication avec le module d'authentification de légitimité par l'intermédiaire du second port désigné.

9. Procédé selon la revendication 7, comprenant en outre :
lors de la surveillance, par le module commercial, qu'un second message indiquant que l'identifiant à authentifier n'est pas authentifié est reçu par l'intermédiaire du second port désigné, l'instruction à un client de fournir des informations d'authentification et l'authentification, par le module d'authentification de légitimité, des informations d'authentification, et la réponse, par le module commercial, à la demande d'accès après que les informations d'authentification sont authentifiées avec succès.

10. Dispositif électronique, comprenant un support de stockage lisible et un processeur, dans lequel le support de stockage lisible est configuré pour stocker des instructions exécutables par machine ;
le processeur est configuré pour lire les instructions exécutables par machine stockées dans le support de stockage lisible, et exécuter les instructions exécutables par machine pour mettre en œuvre le procédé selon l'une quelconque des revendications 1 à 9.

11. Programme informatique, stocké sur un support de stockage lisible par machine, lorsqu'un processeur exécute le programme informatique, amenant le processeur à mettre en œuvre le procédé selon l'une quelconque des revendications 1 à 9.

12. Support de stockage lisible par machine, stockant des instructions exécutables par machine, lorsqu'elles sont invoquées et exécutées par un processeur, les instructions exécutables par machine amènent le processeur à mettre en œuvre le procédé selon l'une quelconque des revendications 1 à 9.
